# EUROPEAN PATENT APPLICATION

(11) **EP 0 930 591 A1**
(43) Date of publication of application: **21.07.1999**
(21) Application number: 98309977.1
(22) Date of filing: 04.12.1998
(51) Int. Cl.: G08B 3/10, H04Q 7/38

(54) **Automatically locating individuals utilizing a combination of wireless media**

(30) Priority: 18.12.1997 US 993324
(71) Applicant: LUCENT TECHNOLOGIES INC., Murray Hill, New Jersey 07974-0636 (US)
(72) Inventor: Griffith, Gary L., Arvada, Colorado 80005 (US); Moran, John C., Thornton, Colorado 80233 (US)
(74) Representative: Buckley, Christopher Simon Thirsk

(57) **Abstract**

By transmitting identification codes of fixed units (102-108) by wireless telephones (112-114) to a central computer (119) via a wireless switching system, the central computer uses the identification codes to locate the wireless telephones. Since a wireless telephone already has the capability for communicating utilizing a wireless protocol, the only additional cost to the wireless telephone is the ability to receive the transmission from the fixed units. The wireless telephones use a first wireless media for transmission, and the fixed units use a second wireless media for transmission. Further, each fixed unit consist only of a transmitter. The second media maybe infrared or ultrasonic transmission. If the wireless telephone fails to detect a fixed unit, the wireless telephone transmits this fact back to the central computer. This is done so as to determine locations that are not serviced by a fixed unit and also to detect failed fixed units. The central computer maintains a log of fixed units with which a wireless telephone had been previously identified. This allows the central computer to determine where there is a need for a fixed unit or which fixed unit has failed. The fixed units can be battery operated. When the controller controlling the fixed unit determines that the battery is reaching a low state in the fixed unit, the controller transmits this information along with the identification code so that the low battery indication can be relayed to the central computer.

## Description

### Technical Field

This invention relates to communication systems and, in particular, to the ability to automatically locate people.

### Background of the Invention

Within the prior art, systems for automatically locating individuals are known. One such system is set forth in U.S. Patent No. 4,275,385. The system disclosed in this patent utilizes fixed units each having an infrared transmitter and receiver which are connected via wired links to a central control computer. Each individual carries a mobile unit having a transmitter and receiver. The fixed transmitters are constantly transmitting a signal to indicate the presence of a fixed unit. When the mobile unit receives the transmission from a fixed transmitter, the mobile unit transmits its identification to the fixed receiver. The fixed receiver is responsive to the identification of the mobile unit to transmit this identification via the wired link to the central computer. The central computer stores the position of the various mobile units. This stored information can be retrieved to determine the position of any of the mobile units.

The problems with the prior art solution are as follows. First, the fixed unit has to be hard wired back to the central computer. In general, the cost of performing the wiring will greatly exceed the cost of the fixed unit itself. Because of this cost, only a limited number of fixed units can be deployed; thus, reducing the precision of locating a mobile unit. Further, each mobile unit must have both a transmitter and a receiver operating in the infrared spectrum.

### Summary of the Invention

A technical advance is achieved by an apparatus and method utilizing fixed units that consist only of a transmitter that transmits the identification code of the fixed unit utilizing a first wireless media. A mobile unit receives the transmitted identification of the fixed unit and utilizes a second wireless media to directly transmit this information back to a central computer. Advantageously, the mobile unit is a wireless telephone that utilizes standard wireless communication channels to report back the received identification of the fixed unit. Since the wireless telephone already has the capability for communicating utilizing a wireless protocol, the only additional cost to the wireless telephone is the ability to receive the transmission from the fixed unit. Advantageously, the first media is infrared or ultrasonic transmission. Advantageously, if the wireless telephone fails to detect a fixed unit, the wireless telephone transmits this fact back to the central computer. This is done so as to determine locations that are not serviced by a fixed unit and also to detect failed fixed units. The central computer maintains a log of fixed units with which a wireless telephone had been previously identified. This allows the central computer to determine where there is a need for a fixed unit or which fixed unit has failed. Advantageously, the fixed units can be battery operated. When the controller controlling the fixed unit determines that the battery is reaching a low state in the fixed unit, the controller transmits this information along with the identification code so that the low battery indication can be relayed to the central computer.

These and other features and advantages of the present invention will become more apparent from the following description of an illustrative embodiment of the invention considered together with the drawing.

### Brief Description of the Drawing

FIG. 1 illustrates, in block diagram form, a system in accordance with the invention;
FIG. 2 illustrates, in block diagram form, a fixed unit in accordance with the invention;
FIG. 3 illustrates, in block diagram form, a wireless telephone in accordance with the invention;
FIG. 4 illustrates, in flow chart form, the steps performed by a wireless terminal in accordance with the invention;
FIG. 5 illustrates, in flow chart form, the steps performed by a fixed unit in accordance with the invention; and
FIG. 6 illustrates, in flow chart form, the steps performed by a central computer in accordance with the invention.

### Detailed Description

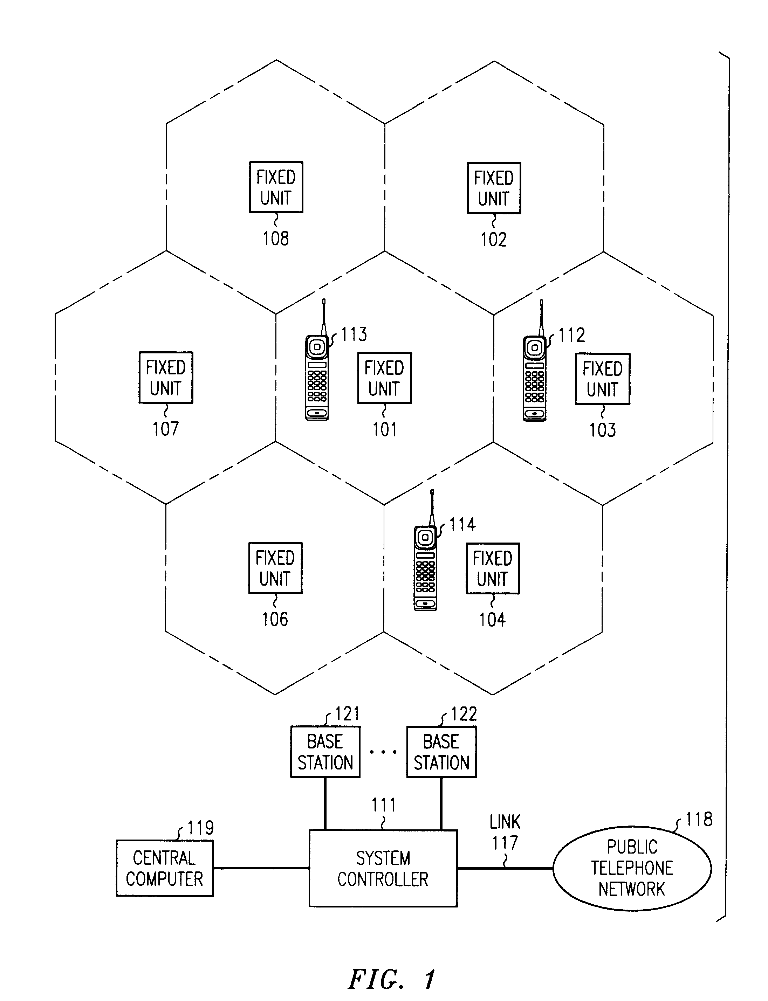

FIG.1 illustrates a system in accordance with the invention. System controller111 via base stations121-122 is providing wireless communication service for wireless handsets 112-114. In addition, fixed units 102-109 each have an identification code that is transmitted periodically utilizing infrared or ultrasonic transmission media. One skilled in the art could readily envision other types of transmission media including high or low frequency radio transmission. Each fixed unit is transmitting within a defined physical area. In the system illustrated in FIG. 1, fixed unit 101 is located in a hallway which provided access to rooms in which are located fixed units 102-108. To understand the operation of the system illustrated in FIG. 1 consider the following example. Initially, wireless handset 113 is in the room serviced by fixed unit 107. When wireless handset 113 moves from the room serviced by fixed unit 107 to the hallway serviced by fixed unit 101, wireless handset 113 recognizes that the identification code being received is no longer that of fixed unit 107 but is the identification code of fixed unit 101. Wireless handset 113 then sets up a logical data channel via a base station to system controller 111. System controller 111 is responsive to this logical channel to set up a logical data connection to central computer 119. Wireless handset 113 then transmits to central computer 119 the fact that it is now receiving the identification code of fixed unit 101. Central computer 119 is responsive to this information to update a database defining the location of wireless handsets to reflect the fact that wireless handset 113 is now in the hallway serviced by fixed unit 101. Alternatively, wireless handset 113 could set up a telephone call to either system controller 111 or central computer 119 and utilize multifrequency tones to transmit the identification code of fixed unit 101.

If fixed unit 101 had failed or did not exist, when wireless handset 113 moved from the room serviced by fixed unit 107 into the hallway, wireless handset 113 informs central computer 119 that it was no longer receiving an identification code for a fixed unit. Central computer 119 is responsive to this information to analyze the possible locations of wireless handset 113. If the hallway was the only exit from the room, central computer 119 initiates a maintenance procedure to have fixed unit 101 repaired. In addition, each of the fixed units 101-108 may be battery operated. If a fixed unit is battery operated and detects that the power output of the battery is low, this low power information is also transmitted with the identification code. A wireless handset receiving the low power identification code transmits this information along with the identification code of the fixed unit to central computer 119 via system controller 111.

In addition, central computer 119 maintains a frequency rate for each fixed unit that defines the rate in which wireless handsets come in contact with each of the fixed units. If the rate at which the contacts with a particular fixed unit fall below the normal statistical frequency rate for that fixed unit, central computer 119 initiates maintenance procedures to determine if the fixed unit has failed.

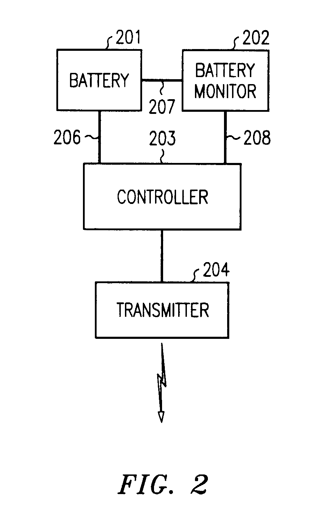

FIG. 2 illustrates in block diagram form a fixed unit. The fixed unit of FIG. 2 is powered by battery 201. However, one skilled in the art could readily see that normal building AC power could also be utilized to power the fixed unit. Controller 203 periodically transmits the identification code for the fixed unit via transmitter 204. Advantageously, transmitter 204 can be transmitting utilizing infrared transmission or ultrasonic transmission. Transmitters for transmitting either infrared or ultrasonic are well known in the art. If controller 203 detects that battery 201 is at a low power level via conductor 207, battery monitor 202, and conductor 208, controller 203 sets alarm indicator 205 and transmits the low power indication along with the identification code via transmitter 204.

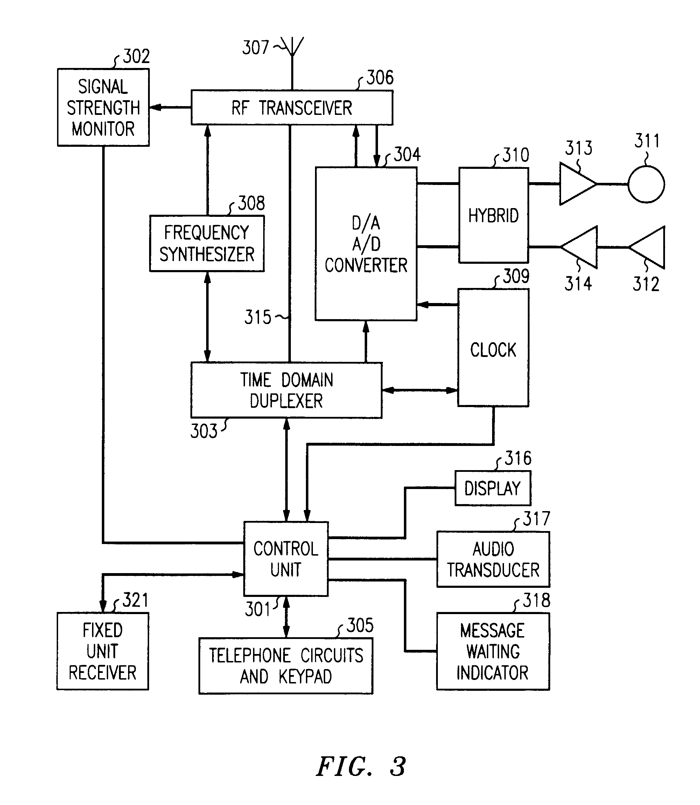

Wireless handset 112 is illustrated in greater detail in FIG. 3. Wireless handset 112 implements a wireless protocol that allows wireless handset 112 to maintain a wireless signal link with wireless telecommunication system controller 111 via base stations 121-122. One air interface that can be used is the Japanese PHS protocol as set forth in "User-Network Interface and Inter-Network Interface Standards for PHS", the Telecommunication Technology Committee, 1995, and "Personal Handy Phone System RCR Standard", Version 1, RCR STD-28, December 20, 1993. The message set of the PHS protocol is similar to the ISDN message set. Overall control of the wireless handset is provided by control unit 301. Units 302, 303, 306, 307, 308, and 309 provide the RF communication capabilities for the wireless handset. Elements 304, 310, and 311-314 provide the audio information received and transmitted to the user; whereas, elements 316-318 and 305 provide the basic user interface. The PHS protocol allows control unit 301 to establish a logical data channel with system controller 111. Control unit 301 utilizes this logical data channel to transmit identification information for fixed units to system controller 111 which in turn transfers this information to central computer 119 of FIG. 1 using well known methods. Fixed unit receiver 321 receives the identification code of a fixed unit and transfers this identification code to control unit 301 for transmission to central computer 119. Fixed unit receiver 321 is of a design well known in the art for either infrared or ultrasonic transmission media. One skilled in the art could readily see that fixed unit receiver 321 could provide to control unit 301 the signal strength of the received signal. Further, control unit 301 could also tune fixed unit receiver 321 to receive different frequencies or other variations of the transmission media using well known techniques in the art.

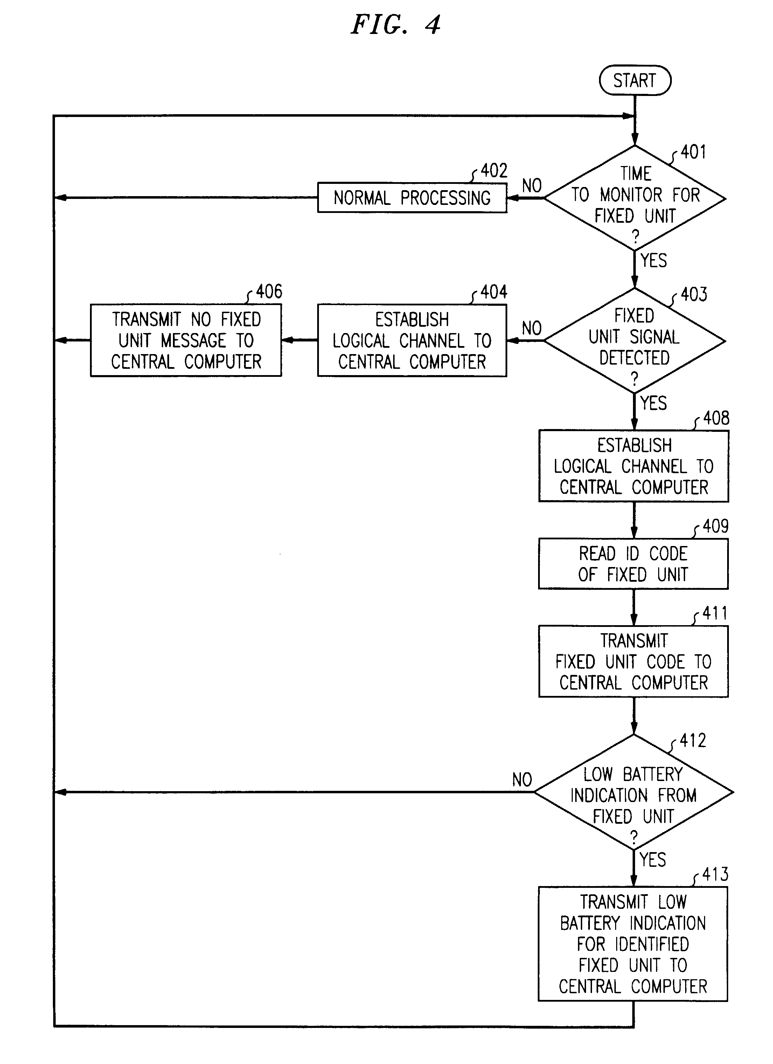

FIG. 4 illustrates the steps performed by a wireless terminal such as wireless handset 113. Decision block 401 determines if the time has elapsed to monitor for a fixed unit. Advantageously, every second the wireless handset monitors to determine if the transmission signal of a fixed unit is being received. If the answer in decision block 401 is no, normal processing is performed by block 402 before control is returned back to decision block 401.

If the answer in decision block 401 is yes, control is transferred to decision block 403 which determines if a transmission signal is being detected. If the answer in decision block 403 is no, control is transferred to block 404 which establishes a logical channel to central computer 119 via a base station and system controller 111. After the establishment of the logical channel, the wireless handset transmits a "no fixed unit" message to the central computer before transferring control back to decision block 401. Returning to decision block 403, if the answer is yes, control is transferred to block 408 which establishes a logical channel to central computer 119. Block 409 determines the identification code of the fixed unit whose transmission signal is being received, and block 411 transmits the received identification code to central computer 119 before transferring control to decision block 412. Decision block 412 determines if a low battery indication was included in the transmission signal from the fixed unit. If the answer is no, control is transferred back to decision block 401. If the answer in decision block 412 is yes, block 413 transmits a low battery indication message to central computer 119 for the identified fixed unit.

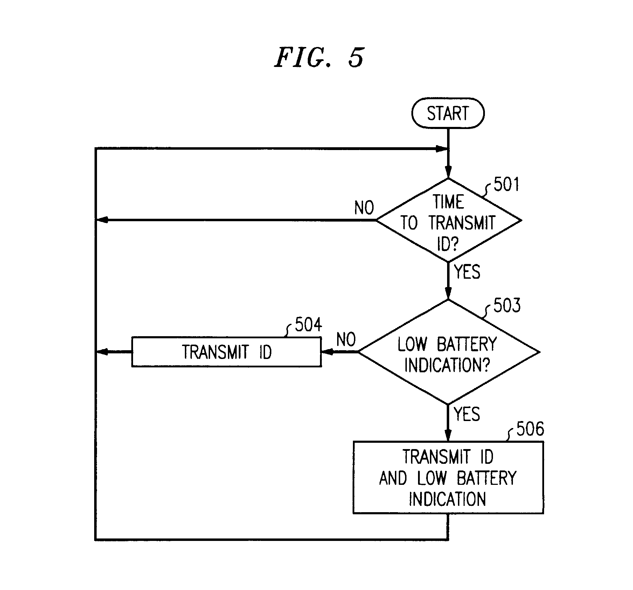

FIG. 5 illustrates the steps performed by a fixed unit. Decision block 501 determines if it is time to transmit the identification code of the fixed unit. Advantageously, the identification code is transmitted every tenth of a second. If the answer is no, control is transferred back to decision block 501. If the answer is yes, decision block 503 determines if battery monitor 202 of FIG. 2 is indicating a low battery. If the answer is no, block 504 simply transmits the identification code of the fixed unit before transferring control back to decision block 501. If the answer in decision block 503 is yes, block 506 transmits a message that includes the identification code and a low battery indication before transferring control back to decision block 501.

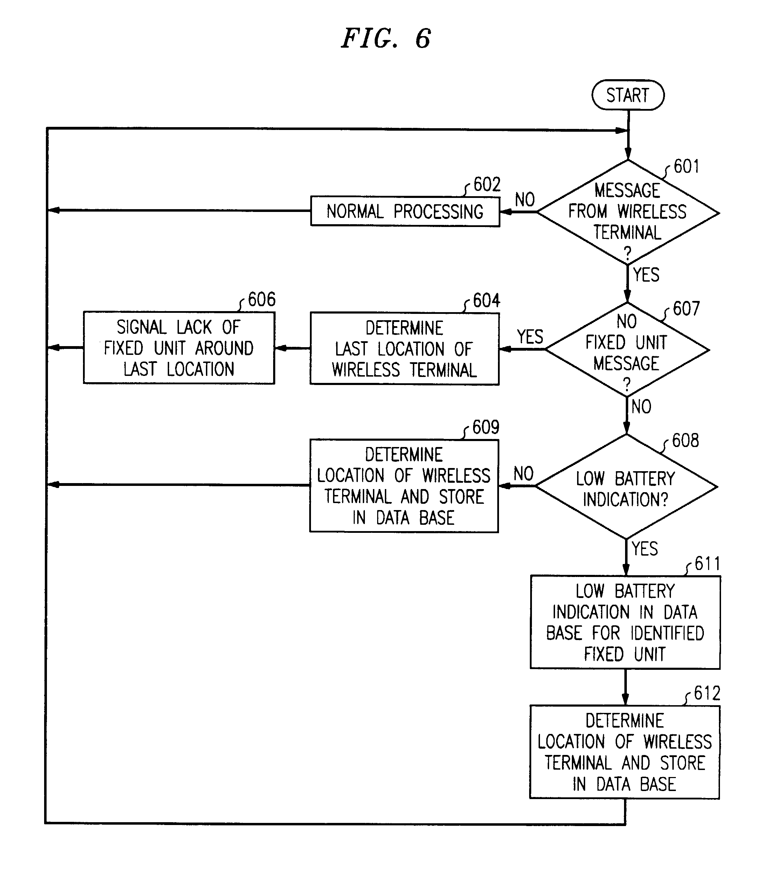

FIG. 6 illustrates the steps performed by central computer 119 in implementing the invention. Decision block 601 determines if there is a message from a wireless handset. If the answer is no, control is transferred to block 602 which performs normal processing before returning control back to decision block 601. If the answer in decision block 601 is yes, decision block 607 determines if a "no fixed unit" message is being received from a wireless telephone. Such a message indicates that a wireless telephone is not receiving the transmission signal from any fixed unit. If the answer is yes in decision block 607, control is transferred to block 604 which determines the last known location. Central computer 119 maintains a list of last known locations for each of the wireless terminals. Block 606 then signals that the wireless telephone cannot receive a fixed unit around the last location listed for the wireless telephone. This signaling may be in the form of a message displayed to an operator of central computer 119 or merely a message being included in a maintenance log of central computer 119. After execution of block 606, control is transferred back to decision block 601.

Returning to decision block 607, if the answer is no, decision block 608 determines if a low battery indication was included in the message identifying the fixed unit from the wireless telephone. If the answer is no in decision block 608, block 609 determines the location based on the identification code of the fixed unit of the wireless telephone and stores this location in a database maintained by central computer 119. The database is utilized by central computer 119 to determine the locations of wireless telephones upon request. Such operations are well known in the art. If the answer in decision block 608 is yes, the low battery indication for the identified fixed unit is placed in the database, and a maintenance message indicating low battery is generated before transferring control to block 612. Block 612 performs the same operations as block 609 before transferring control back to decision block 601.

## Claims

1. A method of indicating location by a wireless telephone (112-114) interconnected to a wireless switching system (111, 121, 122) and using a plurality of fixed units (101-108) each transmitting an unique identification code, comprising the steps of:
CHARACTERIZED IN THAT
receiving an identification code of one of the plurality of fixed units;
establishing a data communication path via the wireless switching system to a central computer (119); and
transmitting the received identification code to the central computer via the data communication path.

2. The method of claim 1 wherein receiving the identification code of each of a plurality of fixed units is performed using a first transmission media and the transmitting by the wireless telephone is performed using a second transmission media.

3. The method of claim 2 further comprises the step of transmitting a first message to the central computer upon an identification code not being received.

4. The method of claim 3 further comprises the step of transmitting an alarm condition with identification code to the central computer upon an alarm condition existing in and being transmitted by the one of the plurality of fixed units.

5. A wireless telephone (112-114) interconnected to a wireless switching system (111, 121, 122) using a first transmission media and a plurality of fixed units (101-108) each transmitting an unique identification code using a second transmission media, comprising:
a transmitter (301-308) for establishing a data communication path via the wireless switching system to a central computer (119) by the wireless telephone;
CHARACTERIZED IN THAT
a receiver (321) for receiving an identification code of one of the plurality of fixed units by the wireless telephone;
the transmitter further transmitting the received identification code to the central computer via the established the data communication path; and
the central computer determining the location of the wireless telephone using the received identification code.

6. The wireless telephone of claim 5 wherein the transmitter further transmitting a first message to the central computer by the wireless telephone upon an identification code not being received.

7. The wireless telephone of claim 6 wherein the transmitter further transmitting an alarm condition with identification code to the central computer upon an alarm condition existing in and being transmitted by the one of the plurality of fixed units.

8. The wireless telephone of claim 7 wherein the data communication path is a logical channel of a signal channel setup between the wireless telephone and the wireless switching system for call processing.
